# EUROPEAN PATENT SPECIFICATION

(11) **EP 3 343 754 B1**
(45) Date of publication and mention of the grant of the patent: **27.04.2022**
(21) Application number: 17210874.8
(22) Date of filing: 28.12.2017
(51) Int. Cl.: H02P 9/00, H02P 9/04

(54) **ENGINE GENERATION SYSTEM AND METHOD OF CONTROLLING THE SAME**
MOTORERZEUGUNGSSYSTEM UND VERFAHREN ZUR STEUERUNG DESSELBEN
SYSTÈME DE GÉNÉRATION DE MOTEURS ET PROCÉDÉ DE COMMANDE CORRESPONDANT

(30) Priority: 03.01.2017 KR 20170000914
(43) Date of publication of application: 04.07.2018
(73) Proprietor: LG Electronics Inc., Yeongdeungpo-gu Seoul, 07336 (KR)
(72) Inventor: PARK, Sunyoung, 08592 Seoul (KR); KIM, Gunmyoung, 08592 Seoul (KR); KIM, Sangyoung, 08592 Seoul (KR)
(74) Representative: Vossius & Partner Patentanwälte Rechtsanwälte mbB

(56) References cited:
- EP-A1- 2 214 303
- JP-A- 2000 166 021
- KR-A- 20100 111 107
- US-A1- 2005 104 377
- US-A1- 2010 289 336

## Description

The present invention relates to a power generation system, and more particularly, to an engine generation system capable of efficiently controlling the amount of power generation using a power conversion system and a method of controlling the same. US 2005/104377 A1 refers to a method for controlling an inverter controlled generator set which comprises a DC power source section having as a power source a generator driven by an engine and an inverter which converts an output of said DC power source section into an AC output, the method comprising a step of controlling a rotational speed of the engine so that the AC output suitable for driving a load is output from the inverter; wherein, after the engine is started, the rotational speed of the engine is controlled by a constant speed control mode for maintaining the rotational speed of the engine at a set rotational speed, and the rotational speed of the engine is increased to the set rotational speed; and wherein an operation of the inverter is started after the rotational speed of the engine reaches the set rotational speed. US 2010/289336 A1 refers to a power supply system is provided with devices of generating an electric power, controlling an amount of power generation, charging an electric power having been generated, converting an electric power having been generated, charging an electric power having been converted, operating an electric load by an electric power having been converted, and detecting a short-circuit fault of input/output of a DC converter. JP 2000/166021 A refers to an HEV-ECU 20 and an E/G-ECU 23 being connected through a multiplex communication line 30 and further connected through a signal line 20g.

A cogeneration system, which is an exemplary engine generation system, is a system that produces electric power using a generator by operating an engine that uses gas fuel, produces hot water using heat generated by the engine, and supplies the electric power or the hot water to equipment consuming the same.

This cogeneration system is connected with an air-conditioning system so as to supply electric power, heat or hot water to the same.

The engine serves to rotate the generator so that the generator produces electric power. The electric power produced by the generator is converted into commercial power by a power conversion system, which changes the current, voltage and frequency of the power produced by the generator, and the commercial power is supplied to power consumers, such as buildings, air-conditioning systems, etc.

Such an engine needs to stably operate while electric power is produced, and the operation of the engine may be controlled in accordance with the amount of power requested by power consumers.

That is, it is required that the engine and the generator are efficiently controlled in accordance with the requested power and that the engine generation system is controlled so as to prevent the occurrence of power loss, time loss and sudden changes in the supply of electric power while the electric power produced by the operation of the engine and the generator is being supplied to power consumers.

Therefore, in an engine generation system that produces electric power using an engine, there is a need for a new method of efficiently controlling the overall process of generating electric power. In addition, there is also a need for an engine generation system capable of effectively performing the new method.

Accordingly, the present invention is directed to an engine generation system and a method of controlling the same that substantially obviate one or more problems due to limitations and disadvantages of the related art. The present disclosure is defined by the independent claims. Dependent claims refer to preferred embodiments.

An object of the present invention is to provide an engine generation system, which is capable of producing electric power using an engine in accordance with a target amount of power generation and stably supplying the electric power to a load, and a method of controlling the same.

Another object of the present invention is to provide an engine generation system, which is capable of setting a target amount of power generation in accordance with an amount of power generation input by a system operator and driving an engine of the engine generation system at a target speed, and a method of controlling the same.

A further object of the present invention is to provide an engine generation system, which enables a load to stably receive a required amount of electric power without great variation, and a method of controlling the same.

Additional advantages, objects, and features of the invention will be set forth in part in the description which follows and in part will become apparent to those having ordinary skill in the art upon examination of the following or may be learned from practice of the invention.

The aforementioned objects are achieved by the independent claims. Dependent claims refer to preferred embodiments.

The objectives and other advantages of the invention may be realized and attained by the structure particularly pointed out in the written description and claims hereof as well as the appended drawings.

The present invention relates to a method of controlling an engine generation system, which includes an engine for supplying driving force to drive a generator, an engine control unit for controlling the engine, and a power conversion system for converting electric power generated by operation of the generator and controlling an amount of power generation, the power conversion system including a converter having a rectifying function, an inverter for converting direct current (DC) into alternating current (AC), and a DC link capacitor disposed between the converter and the inverter, includes initially driving the power conversion system to a generation-enabled state, starting zero current control by operating the converter of the power conversion system, starting the engine and driving the engine at an initial target rotational speed, controlling the amount of power generation by changing the rotational speed, i.e. a number of revolutions per minute (RPM), of the engine from the initial target rotational speed of the engine to a target rotational speed for achieving a set amount of power generation, supplying generated electric power to a load by operating the inverter, and finishing power generation by controlling the engine and the power conversion system.

The zero current control may be a control for preventing electric power from being transferred in any direction from the converter.

The zero current control may be a control that is performed such that the output current of the generator becomes zero.

The zero current control may include operating the converter.

The initially driving may include charging voltage to the DC link capacitor, estimating an initial position of the generator, and/or indicating the generation-enabled state.

The method may further include stopping the converter after performing the estimating the initial position of the generator.

The finishing the power generation may include cutting off transfer of electric power by stopping the inverter, performing zero current control using the converter, and/or stopping the engine by transmitting a stop signal to the engine.

The controlling the amount of power generation may correspond to an operation process of the inverter.

The method may further include, when the converter has a fault, controlling the engine so that the engine is driven at a constant rotational speed, i.e. a constant RPM, regardless of the amount of power generation without performing the controlling the amount of power generation.

The constant rotational speed, i.e. the constant RPM, may be a rotational speed, i.e. an RPM, that corresponds to electric power that is supplied to the load.

The present invention also relates to an engine generation system that includes a generator, an engine for supplying driving force to drive the generator, an engine control unit for controlling the engine, a power conversion system for converting electric power generated by operation of the generator and controlling an amount of power generation, the power conversion system including a converter having a rectifying function, an inverter for converting direct current (DC) into alternating current (AC), and a DC link capacitor disposed between the converter and the inverter, and a main controller for controlling the engine control unit and the power conversion system, wherein the main controller starts zero current control by operating the converter of the power conversion system, starts the engine, controls the amount of power generation by changing the rotational speed, i.e. a number of revolutions per minute (RPM), of the engine from an initial target rotational speed to a target rotational speed for achieving a set amount of power generation, and supplies generated electric power to a load by operating the inverter.

The zero current control may be control for preventing electric power from being transferred in any direction from the converter.

The zero current control may be a control that is performed such that the output current of the generator becomes zero.

When the zero current control is performed, the main controller operates the converter.

When the converter has a fault, the main controller may control the engine so that the engine is driven at a constant rotational speed, i.e. a constant RPM, regardless of the amount of power generation.

The constant rotational speed, i.e. the constant RPM, may be a rotational speed, i.e. an RPM, that corresponds to electric power that is supplied to the load.

When the power generation is finished, the main controller may cut off transfer of electric power by stopping the inverter, may perform zero current control using the converter, and may stop the engine by transmitting a stop signal to the engine.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a conceptual view schematically illustrating an exemplary cogeneration system, to which the present invention is applicable;
FIG. 2 is a view schematically illustrating an engine generation system according to an embodiment of the present invention;
FIG. 3 is a flowchart showing a method of controlling the engine generation system according to an embodiment of the present invention;
FIG. 4 is a signal flow diagram showing the method of controlling the engine generation system according to the embodiment of the present invention in terms of the flow of signals;
FIG. 5 is a graph showing the method of controlling the engine generation system according to the embodiment of the present invention, in terms of the speed of an engine and an amount of power generation over time; and
FIG. 6 is a graph showing a method of controlling the engine generation system according to another embodiment of the present invention.

Reference will now be made in detail to the preferred embodiments of the present invention, examples of which are illustrated in the accompanying drawings. Wherever possible, the same reference numbers will be used throughout the drawings to refer to the same or like parts.

Exemplary embodiments of the present invention will be described in detail. However, the present invention is not restricted to the embodiments, and includes variations, equivalents, and substitutions of technical configurations of the invention disclosed in the appended claims.

It will also be understood that when an element such as a layer, a region, or a substrate is referred to as being "on" another element, it can be directly on the other element, or intervening elements may also be present.

It will be understood that, although the terms "first", "second", etc., may be used herein to describe various elements, components, regions, layers and/or sections, these elements, components, regions, layers and/or sections should not be construed as being limited by these terms.

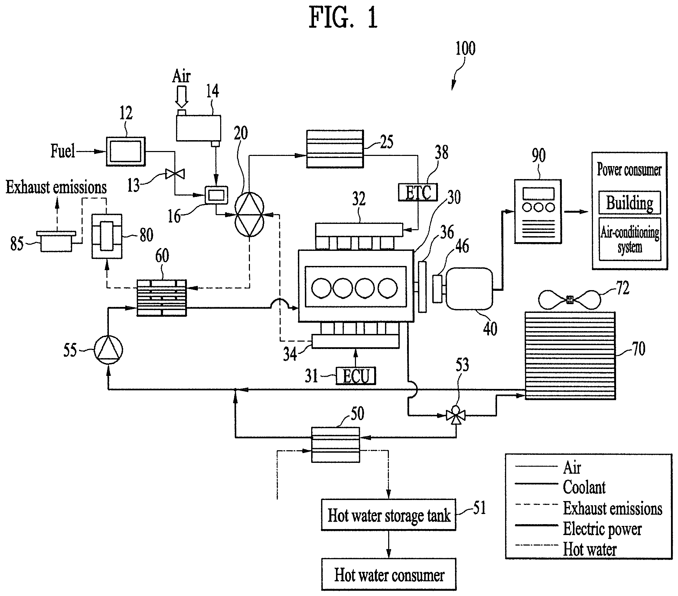

FIG. 1 is a conceptual view schematically illustrating an exemplary cogeneration system, to which the present invention is applicable.

A cogeneration system 100 is a system that produces electric power using a generator by operating an engine that uses gas fuel, produces hot water using heat generated by the engine, and supplies the electric power or the hot water to consumers.

This cogeneration system 100 may be connected with an air-conditioning system so as to supply electric power, heat or hot water to the same.

The gas fuel may be supplied while an outlet pressure thereof is maintained constant all of the time by a zero governor 12, regardless of the configuration of an inlet port or a change in flow rate. The zero governor 12 serves to enable the engine to maintain a stable outlet pressure over a wide range, and also serves to maintain the pressure of the gas fuel, which is supplied to the engine, substantially constant so as to be equivalent to atmospheric pressure. The zero governor 12 may include two solenoid valves to cut off the supply of the fuel.

Air may be filtered and converted into clean air by an air cleaner 14 and may then be supplied. The air cleaner 14 serves to filter the external air, which is to be supplied to the engine, using a filter in order to prevent the introduction of dust, water mist, and oil mist.

The gas fuel and the air, which are supplied in the above-described way, may be mixed and converted into a fuel-air mixture, the fuel-to-air ratio of which is constant, by a mixer 16, and the fuel-air mixture may be sucked into the engine.

A fuel valve 13 is provided at the inlet of the mixer 16 in order to control the supplied amount of gas fuel, which is to be mixed with air. The larger the supplied amount of gas fuel, the higher the fuel-to-air ratio of the fuel-air mixture.

A turbocharger 20 may compress the fuel-air mixture to a high-temperature and high-pressure state. The turbocharger 20 is a device that rotates a turbine using the force of exhaust emissions, compresses the sucked air using the rotational force, and supplies the compressed air to the cylinder of the engine, thereby increasing the output thereof.

The term "turbocharger" is a portmanteau word of the term "turbine" and the term "supercharger". The turbocharger 20 includes a turbine and an air compressor, which is directly connected to the turbine. This turbocharger 20 rotates the turbine wheel using the energy of exhaust emissions, compresses the sucked air using the air compressor, and supplies the compressed air to the cylinder.

The turbocharger 20 is configured such that the turbine wheel having blades and the impeller of the air compressor are connected to a single shaft and are enveloped by respective housings. The turbocharger 20 may be disposed near the exhaust manifold of the engine.

The fuel-air mixture is compressed by the turbocharger 20 and the temperature thereof increases. Therefore, the compressed fuel-air mixture is cooled by an intercooler 25, and is then supplied to the engine 30 via an intake manifold 32. The intercooler 25 serves to increase the density of the fuel-air mixture by cooling the same, thereby increasing the absolute amount of the fuel-air mixture that is introduced into the engine and consequently improving the engine output.

The intercooler 25 may include an air-cooling-type heat-exchange path for cooling the fuel-air mixture using air or a water-cooling-type heat-exchange path for cooling the fuel-air mixture using water. The water-cooling-type intercooler may use coolant as a medium, and may include a separate heat exchanger and a separate pump in order to dissipate heat obtained from the compressed fuel-air mixture to the outside.

A throttle valve 38 may be provided between the intercooler 25 and the intake manifold 32 in order to control the amount of fuel-air mixture that is introduced into the engine 30. An electronic throttle control valve (ETC valve) may be used as the throttle valve.

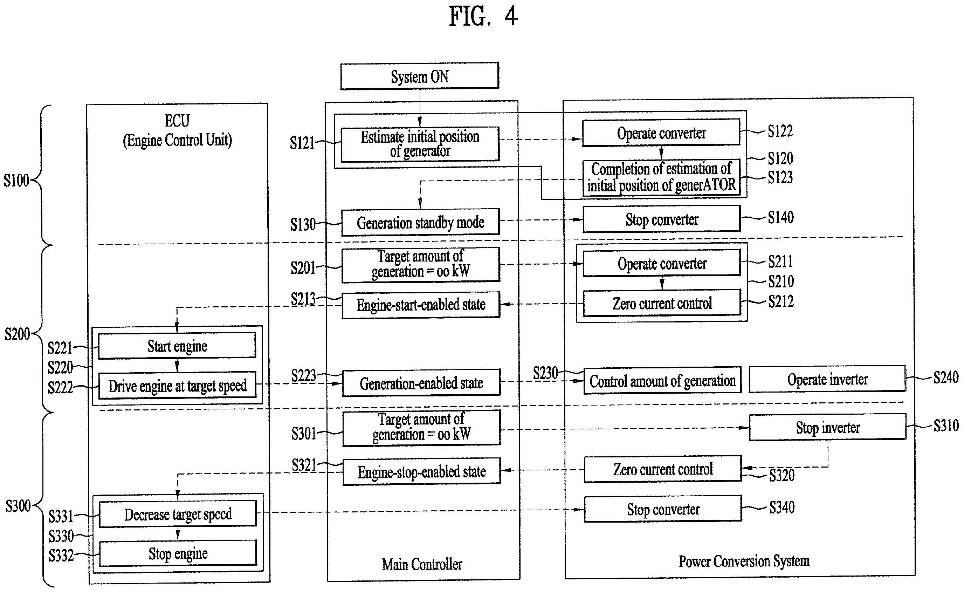

In addition, an engine control unit (ECU) 31 may be provided in order to control various control parameters related to control of the engine. For example, the ETC valve 38 and the control cycle of the ETC valve 38 may be controlled by the ECU 31. This ECU 31 is controlled by a main controller (refer to FIG. 4), which controls the overall operation of the engine generation system.

The engine 30 may be an internal combustion engine that is operated on a 4-stroke cycle, including intake, compression, combustion, and exhaust strokes, using the fuel-air mixture introduced thereinto via the intake manifold 32.

Exhaust emissions generated by the operation of the engine 30 may be discharged through the exhaust manifold 34 and, at the same time, may rotate the impeller of the turbocharger 20.

The engine 30 rotates the generator 40 so that the generator 40 produces electric power. To this end, a pulley 36 provided at an end of the rotary shaft of the engine 30 and a pulley 46 provided at an end of the rotary shaft of the generator 40 may be connected to each other via a belt.

A ratio of the number of revolutions per minute of the pulley 36 of the engine 30 to the number of revolutions per minute of the pulley 46 of the generator 40 may be set to be about 1:3. That is, while the rotary shaft of the engine 30 rotates once, the rotary shaft of the generator 40 may rotate about three times.

The electric power produced by the generator 40 may be converted into commercial power by a power conversion system 90, which changes the current, voltage and frequency of the power produced by the generator, and the commercial power may be supplied to power consumers, such as buildings, air-conditioning systems, etc.

Because the engine 30 is operated by combustion of gas, a great amount of heat is generated. Therefore, configuration is made such that coolant is circulated to absorb the high-temperature heat generated by the engine through heat exchange.

In a vehicle, a radiator is mounted in a coolant circulation passage, whereby all of the waste heat from the engine is discarded. However, in the cogeneration system 100, heat from the engine may be absorbed into the coolant and may be used to produce hot water.

To this end, a hot water heat exchanger 50 is provided in the coolant circulation passage so that the coolant exchanges heat with water, which is supplied separately from the coolant, and consequently the water receives heat from the high-temperature coolant.

The hot water, which is generated by the hot water heat exchanger 50, may be stored in a hot water storage tank 51, and the hot water stored in the hot water storage tank 51 may be supplied to hot water consumers, such as buildings, etc.

When the hot water consumers do not use the hot water, water is not supplied to the hot water heat exchanger 50, which may cause an increase in the temperature of the coolant. To prevent this problem, a separate radiator 70 may be mounted in order to dissipate unnecessary heat from the coolant to the outside.

The radiator 70 dissipates heat in a manner such that the high-temperature coolant exchanges heat with air through a plurality of fins. A heat-dissipating fan 72 may be provided in order to promote the heat dissipation.

A flow passage of the coolant flowing out of the engine 30 may be bifurcated into a flow passage connected to the hot water heat exchanger 50 and a flow passage connected to the radiator 70, and a three-way valve 53 may be mounted at the bifurcation point in order to control the direction in which the coolant flows in accordance with the circumstances. The three-way valve 53 may allow the coolant to be supplied only to the hot water heat exchanger 50 or only to the radiator 70, or may distribute the coolant to the hot water heat exchanger 50 and the radiator 70 in a certain proportion as needed.

The coolant, which has sequentially passed through the three-way valve 53 and the radiator 70 and from which heat has been dissipated by the radiator 70, and the coolant, which has sequentially passed through the three-way valve 53 and the hot water heat exchanger 50, may meet and may then be introduced into the engine 30.

In addition, a coolant pump 55 may be mounted in the coolant circulation passage in order to control the flow speed of the coolant. The coolant pump 55 may be mounted at a position in the coolant circulation passage between a point downstream of the hot water heat exchanger 50 and the radiator 70 and a point upstream of the engine 30.

The exhaust emissions discharged through the exhaust manifold 34 of the engine 30 may be used to operate the above-described turbocharger 20. An exhaust emission heat exchanger 60 may be provided in order to recover waste heat from the exhaust emissions.

The exhaust emission heat exchanger 60 may be mounted at a position in the coolant circulation passage between a point downstream of the coolant pump 55 and a point upstream of the engine 30. The exhaust emission heat exchanger 60 may be configured such that the exhaust emissions discharged through the turbocharger 20 and the coolant exchange heat with each other. The waste heat from the exhaust emissions may be recovered through the exhaust emission heat exchanger 60.

While passing through the exhaust emission heat exchanger 60, the coolant may be heated to a certain extent, i.e. to a warm state, and may then be introduced into the engine 30. In this case, the coolant may also cool the engine 30 sufficiently.

The exhaust emissions, which have passed through the exhaust emission heat exchanger 60 and from which heat has been dissipated, may pass through a muffler 80. The muffler 80 serves to reduce engine exhaust noise.

The exhaust emissions, which have passed through the muffler 80, may pass through a drain filter 85 and may then be discharged outside. The drain filter 85 may be filled with a purification stone in order to purify condensed water generated in the muffler 80 and an exhaust emission line, thereby purifying and neutralizing acidic condensed water and subsequently discharging the same to the outside.

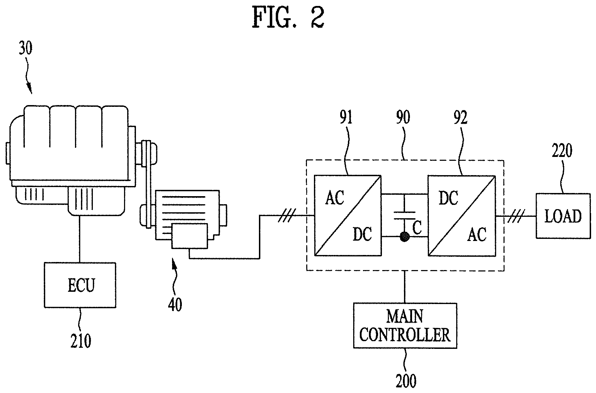

FIG. 2 is a view schematically illustrating an engine generation system according to an embodiment of the present invention.

Referring to FIG. 2, the engine generation system may include an engine 30, configured to supply driving force to drive a generator 40, and an engine control unit (ECU) 210, configured to control the engine 30. The generator 40 may be connected with a power conversion system 90, which is configured to convert electric power generated by the operation of the generator 40 and to control the amount of power generation.

The power conversion system 90 may include a converter 91 configured to convert alternating-current (AC) power generated by the generator 40 into direct-current (DC) power, an inverter 92 configured to convert the DC power converted by the converter 91 into AC power, and a DC link capacitor C disposed between the converter 91 and the inverter 92.

The converter 91 may convert the input AC power produced by the generator 40 into DC power. This converter 91 may be embodied as a DC-DC converter that is operated by a power factor controller.

Further, the DC-DC converter may be embodied as a boost converter. Furthermore, the converter 91 may include a rectifier.

The inverter 92 may include a plurality of inverter switching elements, and may convert the DC power supplied from the converter 91 into AC power having a predetermined frequency through ON/OFF operation of the switching elements and may output the converted AC power.

At this time, the DC power, which is produced by the generator 40 and is supplied from the converter 91, may be stored in the DC link capacitor C. The inverter 92 may convert the DC power stored in the DC link capacitor C into AC power and may output the AC power.

The AC power output from the inverter 92 may drive a load 220.

For example, in the case in which the load 220 is an air-conditioning system that uses a three-phase AC motor as a compressor, the inverter 92 may output three-phase AC power for driving the three-phase AC motor and may supply the same to the air-conditioning system.

In addition, a main controller 200 is provided in order to control the power conversion system 90 and the engine control unit 210.

The above-described engine generation system may serve as a part of the cogeneration system described above with reference to FIG. 1. However, depending on the circumstances, the engine generation system may be constructed separately from the cogeneration system described above with reference to FIG. 1.

In addition, as one example, the engine of the engine generation system may be a gas engine that uses gas.

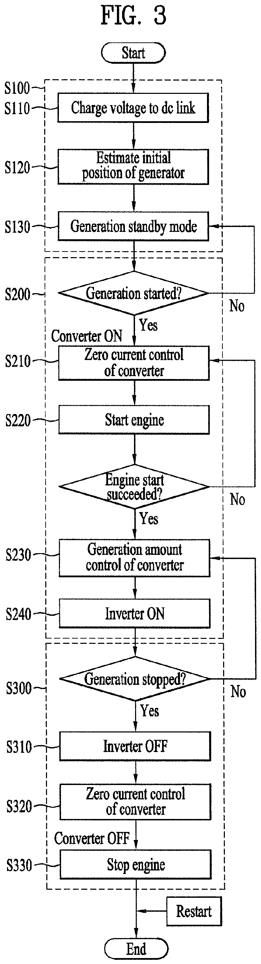

FIG. 3 is a flowchart showing a method of controlling the engine generation system according to an embodiment of the present invention. FIG. 4 is a signal flow diagram showing the method of controlling the engine generation system according to the embodiment of the present invention in terms of the flow of signals.

The method of controlling the engine generation system configured as illustrated in FIG. 2 will be described below with reference to FIGs. 3 and 4.

The method of controlling the engine generation system may largely include a step of initially driving the power conversion system of the engine generation system (S100), a step of performing power generation using the engine generation system (S200), and a step of finishing the power generation (S300).

Described in detail, the method of controlling the engine generation system includes the step S100 of initially driving the power conversion system 90 to a generation-enabled state.

The step S100 of initially driving the power conversion system 90 may include a step of charging voltage to the DC link capacitor C (S110), may include a step of estimating an initial position of the generator 40 (S120), and may include a step of entering a generation standby mode and indicating the generation-enabled state (S130).

Hereinafter, a concrete description of the step S100 of initially driving the power conversion system 90 will be made.

As described above, the step S100 of initially driving the power conversion system 90 may include the step S110 of charging voltage to the DC link capacitor C.

When electric power (380V/220V) is supplied to the engine generation system, the electric power may be supplied to an electric unit of the system, and voltage may be charged to the DC link capacitor C through an initial-charging circuit of the power conversion system 90.

Subsequently, when the engine generation system completes an initial-setting process (detection of failure of sensors, verification of initial values of temperature/pressure/voltage, verification of wiring of the generator, etc.), the system enters an operable state.

Subsequently, the process S120 of estimating the initial position of the generator 40 may be performed.

In the case in which the generator 40 is of a permanent magnet synchronous machine type, control for estimating the initial position of the rotor may be needed. Therefore, the main controller 200 may start the control for estimating the initial position of the generator 40 by outputting an initial generator position estimation command (S121) and operating the converter 91 of the power conversion system 90 (S122).

When the control for estimating the initial position of the generator 40 is completed (S123), the power conversion system 90 informs the main controller 200 of the generation-enabled state, the main controller 200 enters the generation standby mode (S130), and the operation of the converter 91 is stopped (S140).

Subsequently, the step S200 of performing power generation using the engine generation system is conducted.

The step S200 of performing power generation may include a step of starting zero current control by operating the converter 91 of the power conversion system 90 (S210), a step of starting the engine and driving the same at an initial target rotational speed (S220), a step of controlling the amount of power generation by changing the number of revolutions per minute of the engine from the initial target rotational speed of the engine to a target rotational speed for achieving a set amount of power generation (S230), and a step of supplying the generated amount of power to the load 220 by operating the inverter 92 (S240).

Hereinafter, a concrete description of the step S200 of performing power generation will be made.

When a system operator inputs a target amount of power generation to the main controller 200, the main controller 200 starts to perform zero current control (S210).

That is, the main controller 200 operates the converter 91 of the power conversion system 90 (S211) and starts to perform zero current control with respect to the output of the generator (S212).

Zero current control is control that is performed such that the output current of the generator 40 becomes zero, i.e. control for preventing the electric power generated by the generator 40 from being transferred to the DC link voltage terminal (the DC link capacitor C) (through the path of: generator → DC link voltage terminal → system or load) or preventing the electric power from being transferred from the DC link voltage terminal to the generator 40 (through the path of: system → DC link voltage terminal → generator).

That is, zero current control is control for preventing electric power from being supplied in any direction from the converter 91.

Such zero current control may include a step including a basic process for stably driving the engine generation system before the engine is started.

As such, when the converter 91 starts zero current control, the power conversion system 90 informs the main controller 200 of an engine-start-enabled state (S213).

Subsequently, the main controller 200 transmits an engine start signal to the engine control unit (ECU) 210 and drives the engine (S220).

In particular, the main controller 200 controls the ECU 210 so that the ECU 210 starts the engine using a starter motor (S221). Subsequently, the engine 30 operates at an initial target speed.

In accordance with the amount of power generation input by the system operator, the number of revolutions per minute of the engine 30 is changed from the initial target speed to a target speed for achieving the input amount of power generation. That is, the main controller 200 may receive a target amount of power generation from the system operator, and may drive the engine 30 at the target speed in response thereto (S222).

At this time, the power conversion system 90 enters a generation amount control step that controls the system in accordance with the electric power requested by the load 220 (S230).

Because no electric power is supplied to the load 220 before the inverter 92 operates, the initial generation amount control may have the same effect (result) as zero current control.

In order to supply the generated amount of power to the load, the inverter 92 starts to operate (S240). The inverter 92 may generate voltage and frequency, which have constant magnitudes, regardless of the number of revolutions per minute of the engine, and may supply the same electric power as that of the system to the load 220.

As such, when the inverter 92 operates, the required electric power (the target amount of power generation) is supplied to the load (a consumption-oriented load or system) 220.

That is, the electric power generated by the generator 40 may be stably supplied to the load 220 in accordance with the target amount of power generation only while the inverter 92 is operating. Therefore, the load 220 may stably receive the required amount of electric power without large variation.

Through the above control process, the main controller 200 controls the ECU 210 and the power conversion system 90 so that the generator 40 may produce electric power in accordance with the target amount of power generation and may stably supply the same to the load 220.

Subsequently, the step S300 of finishing the power generation may be performed. The step S300 of finishing the power generation may be performed when the load 220 does not require electric power any longer.

The step S300 of finishing the power generation may include a step of cutting off the transfer of electric power to the load 220 by stopping the inverter 92 (S310), a step of performing zero current control using the converter 91 (S320), and a step of stopping the engine 30 by transmitting a stop signal to the engine 30 (S330).

Hereinafter, a concrete description of the step S300 of finishing the power generation will be made.

When the system operator inputs zero as the target amount of power generation or intends to stop the engine generation system, the main controller 200 preferentially stops the inverter 92 in order to cut off the supply of electric power to the load 220.

That is, the main controller 200 may receive the target amount of power generation, which was set to be zero, from the system operator (S301), and may stop the inverter 92 in response thereto (S310).

When the inverter 92 is stopped, no more electric power is supplied to the load. Therefore, the generation amount control of the converter 91 may have the same effect (result) as the above-described zero current control.

At this time, the step S230 of controlling the amount of power generation may correspond to the operation process of the inverter 92. That is, the step S230 of controlling the amount of power generation may be performed only while the inverter 92 is operating.

Subsequently, the main controller 200 changes the control of the converter 91 to zero current control (S320).

Subsequently, the main controller 200 determines that the current state is an engine-stop-enabled state (S321), and performs a step of stopping the engine 30 (S330).

The main controller 200 transmits an engine stop signal to the ECU 210. The ECU 210 performs a step of stopping the engine 30.

In particular, the ECU 210 decreases the speed of the engine (S331), and the engine enters a stop mode (S332).

Subsequently, when the speed of the engine 30 falls to or below a predetermined level (a level at which there is no possibility of the speed of the engine increasing again) and thus it is determined that the engine 30 is stopped, the converter 92 of the power conversion system 90 is stopped.

That is, the operation of the converter 92 may be stopped before the engine 30 is completely stopped.

When the load 220 requires electric power again, it may be possible to restart the engine 30. However, when the load 220 does not require electric power any more, the power generation process is finished by turning off the entire engine generation system.

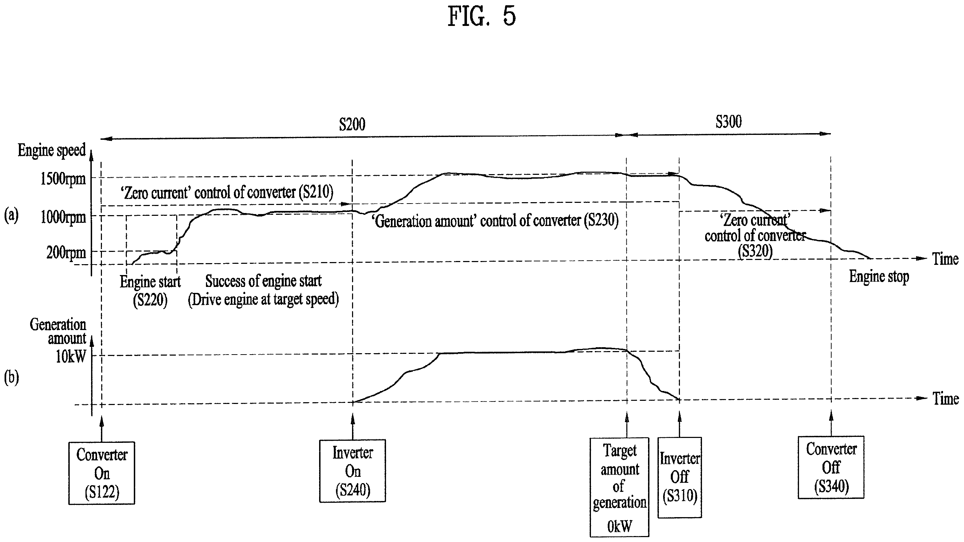

FIG. 5 is a graph showing the method of controlling the engine generation system according to the embodiment of the present invention, in terms of the rotational speed of the engine and the amount of power generation over time.

FIG. 5a shows the method of controlling the engine generation system according to the embodiment of the present invention in terms of the rotational speed (number of revolutions per minute (RPM)) of the engine, and FIG. 5b shows the method of controlling the engine generation system according to the embodiment of the present invention in terms of the amount of power generation (for example, the case in which the target amount of power generation is 10 kW).

As shown in FIGs. 5a and 5b, variation in the speed of the engine and the amount of power generation over time are shown in the graphs. In particular, FIG. 5 shows variation during the step S200 of performing the power generation and the step S300 of finishing the power generation.

Referring to FIG. 5, the engine is started (S220) after the time point at which the converter 91 starts to operate (S122). Subsequently, when the engine is successfully started, the engine is operated to reach a target speed (S222). During this process, zero current control of the converter 91 is performed (S210).

When zero current control of the converter 91 (S210) is finished, the inverter 92 operates (S240). The amount of power generation is controlled using the power conversion system 90 (S230) until the inverter 92 is stopped again (S310).

When the inverter 92 is stopped (S310), zero current control of the converter 91 (S320) is performed again, and the engine 30 enters a stop mode (S330).

As described above, the operation of the converter 91 may be stopped before the engine 30 is completely stopped (S340).

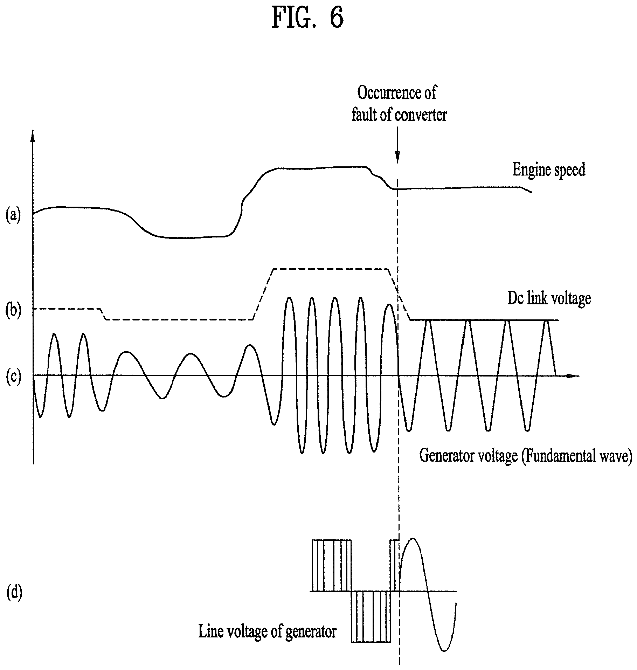

FIG. 6 is a graph showing a method of controlling the engine generation system according to another embodiment of the present invention.

Referring to FIG. 6, this embodiment relates to a control method in the case in which a fault of the converter occurs while control of the amount of power generation is being performed. The features of the above-described embodiment may be identically applied to this embodiment. Hereinafter, this embodiment will be described with reference to FIGs. 1 to 6.

While the engine generation system is producing electric power, for example, while the above-described control of the amount of power generation using the power conversion system 90 is being performed (S230), as shown in FIG. 6d, the line voltage of the generator is output in the form of a square wave by pulse-width-modulation (PWM) switching of a switching element included in the converter 91.

The engine 30 may be driven at the speed shown in FIG. 6a in accordance with the requested amount of electric power. Accordingly, the voltage of the DC link, i.e. the voltage charged to the DC link capacitor C, may be generated as shown in FIG. 6b.

However, the voltage output from the generator 40 has the form of a sine wave (a fundamental wave), as shown in FIG. 6c.

When a fault of the converter 91 occurs and thus the switching operation of the switching element thereof is stopped, the converter 91 does not perform PWM switching any longer. Therefore, the line voltage of the generator is output to be sine-wave-type voltage (back electromotive force (back-EMF)).

As such, when the converter 91 has a fault and thus does not control the amount of power generation, if the engine generation system is driven at a constant RPM regardless of the amount of power generation, it is possible to stably supply electric power to the output side (the load or the system) in spite of the failure.

That is, when the converter 91 of the power conversion system 90 does not have a fault, the engine generation system operates such that the above-described control of the amount of power generation using the power conversion system 90 is performed normally (S230) and the engine is driven at a target rotational speed in accordance with the amount of electric power that is supplied to the load (or the system). When the converter 91 has a fault under the same conditions, the engine 30 is driven at a constant speed regardless of the amount of electric power that is supplied to the load (or the system).

When the engine 30 is driven at a constant rotational speed regardless of variation in the amount of power generation, the main factor determining the speed of the engine may be the voltage supplied to the load (or the system).

For example, when it is intended to supply voltage of 380 V to the load (or the system), the engine 30 may be driven at a speed at which the peak value of the line voltage of the generator 40 becomes about 540 V.

That is, when the converter 91 has a fault, the engine 30 is driven at a constant RPM that corresponds to the electric power that is supplied to the load in the occurrence of a fault.

As is apparent from the above description, according to the present invention, the main controller 200 may set a target amount of power generation in accordance with the amount of power generation input by a system operator, and may drive the engine 30 of the engine generation system at a target speed.

In such an engine generation system, the electric power generated by the generator 40 may be stably supplied to the load 220 in accordance with the target amount of power generation only while the inverter 92 is operating. Therefore, the load 220 may stably receive the required amount of electric power without great variation.

Through the above-described process, the main controller 200 controls the ECU 210 and the power conversion system 90 so that the electric power generated by the generator 40 reaches a target amount of power generation and is stably supplied to the load 220.

## Claims

1. A method of controlling an engine generation system comprising an engine (30) for supplying driving force to drive a generator (40), an engine control unit (210) for controlling the engine (30), and a power conversion system (90) for converting electric power generated by operation of the generator (40) and controlling an amount of power generation, the power conversion system (90) comprising a converter (91) having a rectifying function, an inverter (92) for converting direct current, DC, into alternating current, AC, and a DC link capacitor (C) disposed between the converter (91) and the inverter (92), the method performed by a main controller (200) which controls the engine control unit (210) and the power conversion system (90), the method comprising:
initially driving the power conversion system (SI00) to a generation-enabled state; starting zero current control (S210) by operating the converter (91) of the power conversion system (90);
starting the engine (30) and driving the engine (S220) at an initial target rotational speed;
controlling the amount of power generation (S230) by changing the rotational speed from the initial target rotational speed of the engine (30) to a target rotational speed for achieving a set amount of power generation;
supplying generated electric power to a load (220) by operating the inverter (92); and
finishing power generation (S300) by controlling the engine (30) and the power conversion system (90),
wherein the zero current control is performed so as to prevent the electric power generated by the generator (40) from being transferred to the DC link capacitor (C) or prevent the electric power from being transferred from the DC link capacitor (C) to the generator (40), whereby preventing electric power from being supplied in any direction from the converter (91).

2. The method according to claim 1, when the converter (91) is configured to start the zero current control, the power conversion system (90) informs the main controller (200) of an engine-start-enabled state (S213).

3. The method according to claim 1 or 2, wherein the zero current control comprises operating the converter (91).

4. The method according to any one of claims 1 to 3, wherein the initially driving the power conversion system (S100) comprises at least one of:
charging voltage (S110) to the DC link capacitor (C);
estimating an initial position (S120) of the generator (40); and
indicating the generation-enabled state (S130).

5. The method according to claim 4, further comprising:
stopping the converter (91) after performing estimating the initial position (S120) of the generator (40).

6. The method according to any one of claims 1 to 5, wherein the finishing the power generation (S300) comprises at least one of:
cutting off transfer of electric power (S310) by stopping the inverter (92);
performing zero current control (S320) using the converter (91); and
stopping the engine (S330) by transmitting a stop signal to the engine (30).

7. The method according to any one of claims 1 to 6, wherein controlling the amount of power generation (S230) is performed only while the inverter (92) is operating.

8. The method according to any one of claims 1 to 7, further comprising:
when the converter (91) has a fault, controlling the engine (30) so that the engine (30) is driven at a constant rotational speed regardless of the amount of power generation without performing the controlling the amount of power generation (S230).

9. The method according to claim 8, wherein the constant rotational speed is a rotational speed that corresponds to electric power that is supplied to the load (220).

10. An engine generation system comprising:
a generator (40);
an engine (30) for supplying driving force to drive the generator (40);
an engine control unit (210) for controlling the engine (30);
a power conversion system (90) for converting electric power generated by operation of the generator (40) and controlling an amount of power generation, the power conversion system (90) comprising a converter (91) having a rectifying function, an inverter (92) for converting direct current, DC, into alternating current, AC, and a DC link capacitor disposed between the converter (91) and the inverter (92); and
a main controller (200) for controlling the engine control unit (210) and the power conversion system (90),
wherein the main controller (200) is configured to start zero current control by operating the converter (91) of the power conversion system (90), to start the engine (30), to control the amount of power generation by changing the rotational speed of the engine (30) from an initial target rotational speed to a target rotational speed for achieving a set amount of power generation, and to supply generated electric power to a load (220) by operating the inverter (92),
wherein the zero current control is performed so as to prevent the electric power generated by the generator (40) from being transferred to the DC link capacitor (C) or prevent the electric power from being transferred from the DC link capacitor (C) to the generator (40), whereby preventing electric power from being supplied in any direction from the converter (91).

11. The engine generation system according to claim 10, when the converter (91) starts the zero current control, the power conversion system (90) is configured to inform the main controller (200) of an engine-start-enabled state (S213).

12. The engine generation system according to claim 10 or 11, wherein, when the zero current control is performed, the main controller (200) is configured to operate the converter (91).

13. The engine generation system according to any one of claims 10 to 12, wherein, when the converter (91) has a fault, the main controller (200) is configured to control the engine (30) so that the engine (30) is driven at a rotational speed regardless of the amount of power generation.

14. The engine generation system according to claim 13, wherein the constant rotational speed is a rotational speed that corresponds to electric power that is supplied to the load (220).

15. The engine generation system according to any one of claims 10 to 14, wherein, when the power generation is finished, the main controller (200) is configured to cut off transfer of electric power by stopping the inverter (92), to perform zero current control using the converter (91), and to stop the engine (30) by transmitting a stop signal to the engine (30).

## Patentansprüche

1. Verfahren zur Steuerung eines Motorerzeugungssystems, das aufweist: einen Motor (30) zum Liefern einer Antriebskraft zum Antreiben eines Generators (40), eine Motorsteuereinheit (210) zum Steuern des Motors (30) und ein Leistungsumwandlungssystem (90) zum Umwandeln von elektrischer Leistung, die durch den Betrieb des Generators (40) erzeugt wird, und Steuern einer Menge der Leistungserzeugung, wobei das Leistungsumwandlungssystem (90) einen Konverter (91) mit einer Gleichrichterfunktion, einen Inverter (92) zum Umwandeln von Gleichstrom, DC, in Wechselstrom, AC, und einen DC-Zwischenkreiskondensator (C), der zwischen dem Konverter (91) und dem Inverter (92) angeordnet ist, aufweist, wobei das Verfahren von einer Hauptsteuerung (200) durchgeführt wird, welche die Motorsteuereinheit (210) und das Leistungsumwandlungssystem (90) steuert, wobei das Verfahren aufweist:
erstes Antreiben des Leistungsumwandlungssystems (S100) in einen erzeugungsfähigen Zustand;
Starten der Nullstromregelung (S210) durch Betreiben des Konverters (91) des Leistungsumwandlungssystems (90);
Starten des Motors (30) und Antreiben des Motors (S220) mit einer Anfangszieldrehzahl;
Steuern der Leistungserzeugungsmenge (S230) durch Ändern der Drehzahl von der Anfangszieldrehzahl des Motors (30) auf eine Zieldrehzahl, um eine festgelegte Leistungserzeugungsmenge zu erreichen;
Liefern von erzeugter elektrischer Leistung an einen Verbraucher (220), indem der Inverter (92) betrieben wird; und
Beenden der Leistungserzeugung (S300) durch Steuern des Motors (30) und des Leistungsumwandlungssystems (90),
wobei die Nullstromsteuerung durchgeführt wird, um zu verhindern, dass die von dem Generator (40) erzeugte elektrische Leistung an den DC-Zwischenkreiskondensator (C) überführt wird, oder zu verhindern, dass die elektrische Leistung von dem DC-Zwischenkreiskondensator (C) an den Generator (40) überführt wird, wobei verhindert wird, dass elektrische Leistung von dem Konverter (91) in irgendeine Richtung geliefert wird.

2. Verfahren nach Anspruch 1, wobei der Konverter (91) konfiguriert ist, um die Nullstromsteuerung zu starten, wobei das Leistungsumwandlungssystem (90) die Hauptsteuerung (200) über einen motorstartfähigen Zustand informiert (S213).

3. Verfahren nach Anspruch 1 oder 2, wobei die Nullstromsteuerung das Betreiben des Konverters (91) aufweist.

4. Verfahren nach einem der Ansprüche 1 bis 3, wobei das erste Antreiben des Leistungsumwandlungssystems (S100) wenigstens eines der folgenden aufweist:
Laden von Spannung (S110) auf den DC-Zwischenkreiskondensator (C);
Schätzen einer Anfangsposition (S120) des Generators (40); und
Anzeigen des erzeugungsfähigen Zustands (S130).

5. Verfahren nach Anspruch 4, das ferner aufweist:
Stoppen des Konverters (91) nach dem Durchführen des Schätzens der Anfangsposition (S120) des Generators (40).

6. Verfahren nach einem der Ansprüche 1 bis 5, wobei das Beenden der Leistungserzeugung (S300) wenigstens eines der folgenden aufweist:
Abschalten der Überführung von elektrischer Leistung (S310) durch Stoppen des Inverters (92);
Durchführen der Nullstromsteuerung (S320) unter Verwendung des Konverters (91); und
Stoppen des Motors (S330) durch Übertragen eines Stoppsignals an den Motor (30).

7. Verfahren nach einem der Ansprüche 1 bis 6, wobei das Steuern der Leistungserzeugungsmenge (S230) nur durchgeführt wird, während der Inverter (92) arbeitet.

8. Verfahren nach einem der Ansprüche 1 bis 7, das ferner aufweist:
wenn der Konverter (91) einen Fehler hat, Steuern des Motors (30), so dass der Motor unabhängig von der Leistungserzeugungsmenge mit einer konstanten Drehzahl angetrieben wird, ohne die Leistungserzeugungsmenge zu steuern (S230).

9. Verfahren nach Anspruch 8, wobei die konstante Drehzahl eine Drehzahl ist, die der an den Verbraucher (220) gelieferten elektrischen Leistung entspricht.

10. Motorerzeugungssystem, das aufweist:
einen Generator (40);
einen Motor (30) zum Liefern einer Antriebskraft zum Antreiben des Generators (40);
eine Motorsteuereinheit (210) zum Steuern des Motors (30);
ein Leistungsumwandlungssystem (90) zum Umwandeln von elektrischer Leistung, die durch den Betrieb des Generators (40) erzeugt wird, und Steuern einer Menge der Leistungserzeugung, wobei das Leistungsumwandlungssystem (90) einen Konverter (91) mit einer Gleichrichterfunktion, einen Inverter (92) zum Umwandeln von Gleichstrom, DC, in Wechselstrom, AC, und einen DC-Zwischenkreiskondensator, der zwischen dem Konverter (91) und dem Inverter (92) angeordnet ist, aufweist, und
eine Hauptsteuerung (200) zum Steuern der Motorsteuereinheit (210) und des Leistungsumwandlungssystems (90),
wobei die Hauptsteuerung (200) konfiguriert ist, die Nullstromsteuerung zu starten, indem sie den Konverter (90) des Leistungsumwandlungssystems (90) startet, den Motor (30) zu starten, die Leistungserzeugungsmenge durch Ändern der Drehzahl des Motors (30) von einer Anfangsdrehzahl auf eine Zieldrehzahl zu steuern, um eine festgelegte Leistungserzeugungsmenge zu erreichen, und die erzeugte elektrische Leistung an einen Verbraucher (220) zu liefern, indem der Inverter (92) betrieben wird; und
wobei die Nullstromsteuerung durchgeführt wird, um zu verhindern, dass die von dem Generator (40) erzeugte elektrische Leistung an den DC-Zwischenkreiskondensator (C) überführt wird, oder zu verhindern, dass die elektrische Leistung von dem DC-Zwischenkreiskondensator (C) an den Generator (40) überführt wird, wobei verhindert wird, dass elektrische Leistung von dem Konverter (91) in irgendeine Richtung geliefert wird.

11. Motorerzeugungssystem nach Anspruch 10, wobei der Konverter (91) die Nullstromsteuerung startet, wobei das Leistungsumwandlungssystem (90) konfiguriert ist, um die Hauptsteuerung (200) über einen motorstartfähigen Zustand zu informieren (S213).

12. Motorerzeugungssystem nach Anspruch 10 oder 11, wobei die Hauptsteuerung (200) konfiguriert ist, um den Konverter (91) zu betreiben, wenn die Nullstromsteuerung durchgeführt wird.

13. Motorerzeugungssystem nach einem der Ansprüche 10 bis 12, wobei die Hauptsteuerung (200) konfiguriert ist, um, wenn der Konverter (91) einen Fehler hat, den Motor (30) derart zu steuern, dass der Motor (30) unabhängig von der Leistungserzeugungsmenge mit einer Drehzahl angetrieben wird.

14. Motorerzeugungssystem nach Anspruch 13, wobei die konstante Drehzahl eine Drehzahl ist, die der an den Verbraucher (220) gelieferten elektrischen Leistung entspricht.

15. Motorerzeugungssystem nach einem der Ansprüche 10 bis 14, wobei die Hauptsteuerung (200) konfiguriert ist, um, wenn die Leistungserzeugung beendet ist, die Überführung von elektrischer Leistung durch Stoppen des Inverters (92) auszuschalten, die Nullstromsteuerung unter Verwendung des Konverters (91) durchzuführen und den Motor (30) durch Übertragen eines Stoppsignals an den Motor (30) zu stoppen.

## Revendications

1. Procédé de commande d'un système de génération de moteur comprenant un moteur (30) pour apporter une force d'entraînement afin d'entraîner un générateur (40), une unité de commande de moteur (210) pour commander le moteur (30) et un système de conversion d'énergie (90) pour convertir l'énergie électrique générée par l'actionnement du générateur (40) et commander une quantité de génération d'énergie, le système de conversion d'énergie (90) comprenant un convertisseur (91) présentant une fonction de redressement, un onduleur (92) pour convertir le courant continu, CC, en courant alternatif, CA, et un condensateur à liaison CC (C) disposé entre le convertisseur (91) et l'onduleur (92), le procédé étant effectué par un dispositif de commande principal (200) qui commande l'unité de commande de moteur (210) et le système de conversion d'énergie (90), le procédé comprenant :
l'entraînement initial du système de conversion d'énergie (S100) à un état activé par génération ;
le démarrage d'une commande à courant nul (S210) en actionnant le convertisseur (91) du système de conversion d'énergie (90) ;
le démarrage du moteur (30) et l'entraînement du moteur (S220) à une vitesse de rotation cible initiale ;
la commande de la quantité de génération d'énergie (S230) en faisant passer la vitesse de rotation de la vitesse de rotation cible initiale du moteur (30) à une vitesse de rotation cible pour réaliser une quantité définie de génération d'énergie ;
l'apport d'énergie électrique générée à une charge (220) en actionnant l'onduleur (92) ; et
la fin de la génération d'énergie (S300) en commandant le moteur (30) et le système de conversion d'énergie (90),
dans lequel la commande à courant nul est effectuée de manière à empêcher l'énergie électrique générée par le générateur (40) d'être transférée au condensateur à liaison CC (C) ou empêcher l'énergie électrique d'être transférée du condensateur à liaison CC (C) au générateur (40), empêchant ainsi l'énergie électrique d'être apportée dans n'importe quelle direction depuis le convertisseur (91).

2. Procédé selon la revendication 1, lorsque le convertisseur (91) est configuré pour démarrer la commande à courant nul, le système de conversion d'énergie (90) informe le dispositif de commande principal (200) d'un état activé par démarrage de moteur (S213).

3. Procédé selon la revendication 1 ou 2, dans lequel la commande à courant nul comprend l'actionnement du convertisseur (91).

4. Procédé selon l'une quelconque des revendications 1 à 3, dans lequel l'entraînement initial du système de conversion d'énergie (S100) comprend au moins une parmi :
la charge d'une tension (S110) dans le condensateur à liaison CC (C) ;
l'estimation d'une position initiale (S120) du générateur (40) ; et
l'indication de l'état activé par génération (S130).

5. Procédé selon la revendication 4, comprenant en outre :
l'arrêt du convertisseur (91) après la réalisation de l'estimation de la position initiale (S120) du générateur (40).

6. Procédé selon l'une quelconque des revendications 1 à 5, dans lequel la fin de la génération d'énergie (S300) comprend au moins un parmi :
l'interruption du transfert d'énergie électrique (S310) en arrêtant l'onduleur (92) ;
la réalisation d'une commande à courant nul (S320) à l'aide du convertisseur (91) ; et
l'arrêt du moteur (S330) en transmettant un signal d'arrêt au moteur (30).

7. Procédé selon l'une quelconque des revendications 1 à 6, dans lequel la commande de la quantité de génération d'énergie (S230) est effectuée uniquement pendant que l'onduleur (92) fonctionne.

8. Procédé selon l'une quelconque des revendications 1 à 7, comprenant en outre :
lorsque le convertisseur (91) présente un défaut, la commande du moteur (30) de telle sorte que le moteur (30) est entraîné à une vitesse de rotation constante quelle que soit la quantité de génération d'énergie sans effectuer la commande de la quantité de génération d'énergie (S230).

9. Procédé selon la revendication 8, dans lequel la vitesse de rotation constante est une vitesse de rotation qui correspond à l'énergie électrique qui est apportée à la charge (220).

10. Système de génération de moteur comprenant :
un générateur (40) ;
un moteur (30) pour apporter une force d'entraînement pour entraîner le générateur (40) ;
une unité de commande de moteur (210) pour commander le moteur (30) ;
un système de conversion d'énergie (90) pour convertir l'énergie électrique générée par l'actionnement du générateur (40) et commander une quantité de génération d'énergie, le système de conversion d'énergie (90) comprenant un convertisseur (91) présentant une fonction de redressement, un onduleur (92) pour convertir le courant continu, CC, en courant alternatif, CA, et un condensateur à liaison CC disposé entre le convertisseur (91) et l'onduleur (92) ; et
un dispositif de commande principal (200) pour commander l'unité de commande de moteur (210) et le système de conversion d'énergie (90),
dans lequel le dispositif de commande principal (200) est configuré pour démarrer une commande à courant nul en actionnant le convertisseur (91) du système de conversion d'énergie (90), pour démarrer le moteur (30), pour commander la quantité de génération d'énergie en faisant passer la vitesse de rotation du moteur (30) d'une vitesse de rotation cible initiale à une vitesse de rotation cible pour réaliser une quantité définie de génération d'énergie, et pour apporter l'énergie électrique générée à une charge (220) en actionnant l'onduleur (92),
dans lequel la commande à courant nul est effectuée de manière à empêcher l'énergie électrique générée par le générateur (40) d'être transférée au condensateur à liaison CC (C) ou empêcher l'énergie électrique d'être transférée du condensateur à liaison CC (C) au générateur (40), empêchant ainsi l'énergie électrique d'être apportée dans n'importe quelle direction depuis le convertisseur (91).

11. Système de génération de moteur selon la revendication 10, lorsque le convertisseur (91) démarre la commande à courant nul, le système de conversion d'énergie (90) est configuré pour informer le dispositif de commande principal (200) d'un état activé par démarrage de moteur (S213).

12. Système de génération de moteur selon la revendication 10 ou 11, dans lequel, lorsque la commande à courant nul est effectuée, le dispositif de commande principal (200) est configuré pour actionner le convertisseur (91).

13. Système de génération de moteur selon l'une quelconque des revendications 10 à 12, dans lequel, lorsque le convertisseur (91) présente un défaut, le dispositif de commande principal (200) est configuré pour commander le moteur (30) de telle sorte que le moteur (30) est entraîné à une vitesse de rotation quelle que soit la quantité de génération d'énergie.

14. Système de génération de moteur selon la revendication 13, dans lequel la vitesse de rotation constante est une vitesse de rotation qui correspond à l'énergie électrique qui est apportée à la charge (220).

15. Système de génération de moteur selon l'une quelconque des revendications 10 à 14, dans lequel, lorsque la génération d'énergie est terminée, le dispositif de commande principal (200) est configuré pour interrompre le transfert d'énergie électrique en arrêtant l'onduleur (92), pour effectuer une commande à courant nul à l'aide du convertisseur (91), et pour arrêter le moteur (30) en transmettant un signal d'arrêt au moteur (30).
